# EUROPEAN PATENT SPECIFICATION

(11) **EP 2 182 231 B1**
(45) Date of publication and mention of the grant of the patent: **12.03.2014**
(21) Application number: 08791905.6
(22) Date of filing: 30.07.2008
(51) Int. Cl.: F16C 33/54, F16C 19/36, F16C 33/56, F16C 33/58, F16C 33/46

(54) **TAPERED ROLLER BEARING**
KEGELROLLENLAGER
PALIER À ROULEAUX CONIQUES

(30) Priority: 02.08.2007 JP 2007202084
(43) Date of publication of application: 05.05.2010
(73) Proprietor: NTN Corporation, Osaka-shi, Osaka 550-0003 (JP)
(72) Inventor: UENO, Takashi, Iwata-shi Shizuoka 438-0037 (JP)
(74) Representative: Eder, Christian
(86) International application number: PCT/JP2008/063674
(87) International publication number: WO 2009/017159

(56) References cited:
- EP-A1- 1 770 294
- JP-A- 2002 054 638
- JP-A- 2005 016 656
- JP-A- 2005 098 412
- JP-U- 60 007 423
- US-A- 3 004 809
- US-A1- 2004 047 528

## Description

### Technical Field

The present invention relates to a tapered roller bearing.

### Background Art

Driving force of an automobile engine is transmitted to wheels through a power transmission system including any or all of a transmission, a propeller shaft, a differential, and a drive shaft.

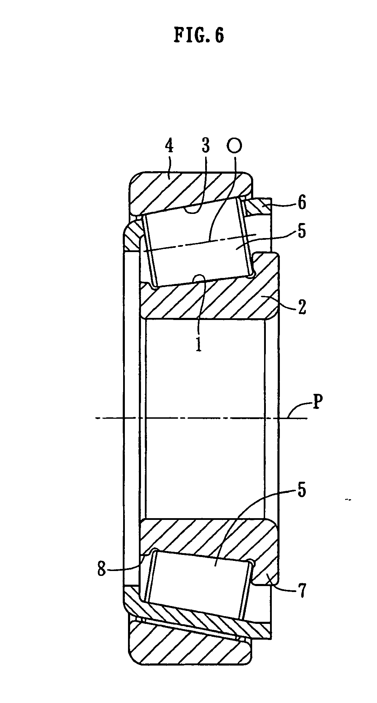

In the power transmission system, there is used in many cases, as a bearing for supporting a shaft, a tapered roller bearing excellent in the following: load capability with respect to radial load and axial load, impact resistance, and bearing rigidity. As illustrated in FIG. 6, the tapered roller bearing generally includes an inner race 2 having a tapered raceway surface 1 on an outer peripheral side thereof, an outer race 4 having a tapered raceway surface 3 on an inner peripheral side thereof, a plurality of tapered rollers 5 arranged so as to be rollable between the inner race 2 and the outer race 4, and a retainer 6 for retaining the tapered rollers 5 at predetermined circumferential intervals.

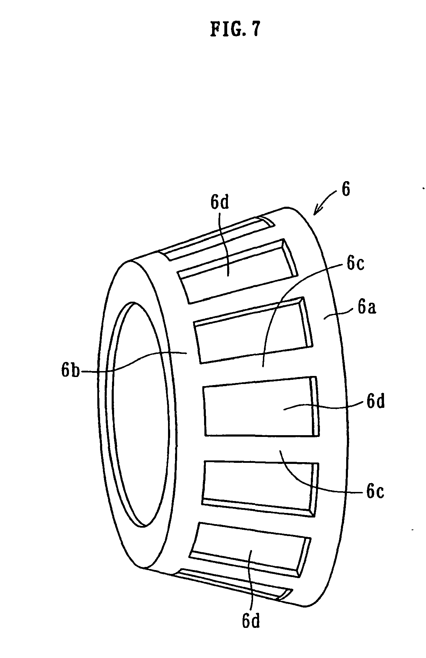

As illustrated in FIG. 7, the retainer 6 includes a pair of annular portions 6a and 6b and brace portions 6c for coupling the annular portions 6a and 6b with each other. The tapered rollers 5 are accommodated in pockets 6d formed between the brace portions 6c adjacent to each other in a circumferential direction.

In the tapered roller bearing, the tapered rollers 5 and the respective raceway surfaces 1 and 3 of the inner race 2 and the outer race 4 are held in linear contact with each other, and the tapered roller bearing is designed such that the respective raceway surfaces 1 and 3 of the inner and outer races and a roller center O accord with one point (not shown) on an axial center P (refer to FIG. 6).

Thus, the tapered rollers 5 are pressed to a larger diameter side when load acts thereon. In order to bear the load, a flange portion 7 protruding to a radially outer side is provided on a larger diameter side of the inner race 2. Further, in order to prevent the tapered rollers 5 from falling to a smaller end side until completion of the incorporation of the bearing into a machine or the like, there is provided a flange portion 8 protruding also to the smaller end side of the inner race 2.

In recent years, in accordance with an increase in in-vehicle space, progress has been made in the following: reduction in size of an engine room, high output of an engine, and a multi-stage transmission for less fuel consumption. Under the circumstances, use environment of tapered roller bearings used therefor becomes more severe each year. In order to meet the demand for life of the bearing under the use environment, it is necessary to achieve longer life of the bearing.

Under the above-mentioned circumstances, there has been proposed to achieve longer life of the bearing by increasing the number of the rollers or by increasing the length of the rollers so as to increase load capacity within the same dimension as that of the currently-used bearing. However, in the currently-used structure as described above, in terms of assembly of the bearing, the flange portion (small flange) 8 is provided on a smaller diameter side of the raceway surface of the inner race 2. Meanwhile, the flange portion 8 imposes restriction on an increase in the length dimension of the tapered rollers 5. Further, the tapered rollers 5 are retained by the retainer 6 as described above, and the brace portions 6c of the retainer 6 are interposed between the tapered rollers 5 adjacent to each other in the circumferential direction. Thus, the brace portions 6c impose restriction also on the rollers to be increased in number. As described above, there has been conventionally a limitation on an increase in the load capacity.

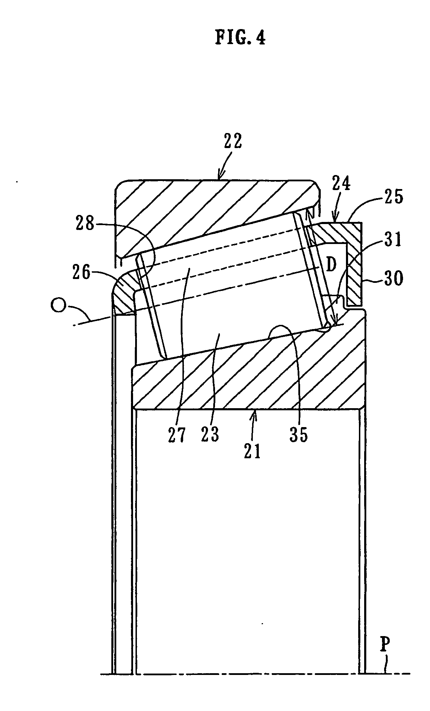

Incidentally, in some conventional tapered roller bearings, a flange portion (small flange) on a smaller diameter side is omitted in an inner race (Patent Document 1). When the flange portion on the smaller diameter side is omitted in the inner race, it is possible to secure a longer axial length of the tapered rollers correspondingly to a size of the flange portion thus omitted, and hence possible to achieve an increase in the load capacity. However, when the flange portion on the smaller diameter side is omitted in the inner race, the tapered rollers 5 fall to the smaller end side before completion of the incorporation into a machine or the like. As a countermeasure, as illustrated in FIG. 4, in the bearing in which the flange portion (small flange) on the smaller diameter side is omitted in the inner race, hook portions to be engaged with the flange portion 7 on the larger diameter side are provided in the retainer so that the tapered rollers do not fall off.

That is, the tapered roller bearing illustrated in FIG. 4 includes an inner race 21, an outer race 22, a plurality of tapered rollers 23 arranged so as to be rollable between the inner race 21 and the outer race 22, and a retainer 24 for retaining the tapered rollers 23 at predetermined circumferential intervals.

Similarly to the retainer 6 illustrated in FIG. 7, the retainer 24 includes a larger-diameter-side annular portion 25, a smaller-diameter-side annular portion 26, and brace portions 27 for coupling the larger-diameter-side annular portion 25 and the smaller-diameter-side annular portion 26 with each other. Pockets 28 are formed between the brace portions 27 adjacent to each other in a circumferential direction, and the tapered rollers 23 are retained in the pockets 28, respectively.

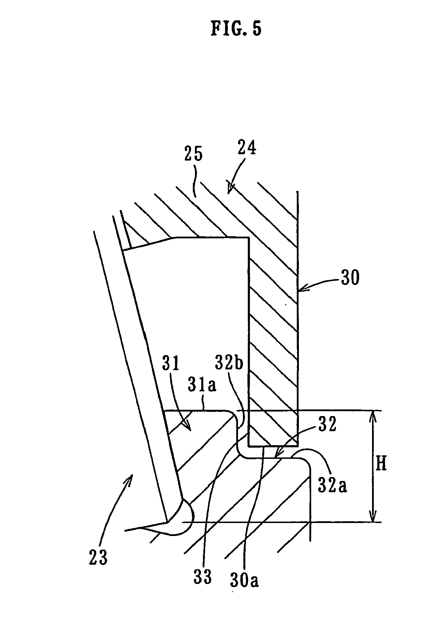

In the larger-diameter-side annular portion 25, there are formed hook portions 30 arranged at predetermined pitches in the circumferential direction. In this case, each of the hook portions 30 is constituted by a flat rectangular piece protruding from the outer peripheral end portion of the larger-diameter-side annular portion 25 to a radially inner direction. Further, as illustrated in FIG. 5, in a flange portion 31 of the inner race 21, a cutout portion 32 is formed on a larger diameter side of a radially outer surface 31a of the flange portion 31 of the inner race 21, and each of the hook portions 30 is engaged with the cutout portion 32. In this case, between the hook portions 30 and the cutout portions 32, there are slight gaps in an axial direction and a radial direction. With this, the retainer 24 is allowed to slightly move in the axial direction and the radial direction. In this context, the hook portions 30 are kept out of contact with the flange portion 31 when the retainer in a neutral state with respect to the axial center during operation (in a bearing-assembled state) is kept out of contact with the same flange portion 31, and the hook portions 30 are brought into contact with the flange portion 31 while a bottom surface 32a of the flange portion 31 of each of the inner race 21 and an inner surface (radially inner surface) 30a of each of the hook portions 30 are brought into contact with each other. The hook portions 30 effect hooking so that the inner race 21, the tapered rollers 23, and the retainer 24 are maintained in the assembled state during non-operation.

From JP 2005 016656, a tapered roller bearing is known for reducing the interfering force between a retainer and the rollers. With a formula for geometrical parameters of the bearing, the retainer stress is limited to one fifth of the fatigue limit of the retainer material. However, the result is not satisfying.

In US 3,004,809, thrust roller bearings are described with a retainer clamped to the large diameter side of the inner ring. No relative movement between the inner ring and the retainer is possible here, causing high friction forces.

Patent Document 1: Japanese Utility Model Application Laid-open No. Sho 58-165324

### Disclosure of the Invention

### Problem to be solved by the Invention

In the tapered roller bearing as illustrated in FIG. 4, regarding the hook portions 30, in order to prevent bringing a radial cutout portion 32b of the cutout portion 32 of the flange portion 31 and inner surfaces 33 of the hook portions 30 into contact with each other during operation, it is necessary to set the size of the cutout portion 32 in consideration of the moving amount of the hook portions 30 during operation. Specifically, as illustrated in FIG. 5, a cutout dimension of the cutout portion 32 is set in accordance with an allowable relative approaching amount of the radially inner ends 30a of the hook portions 30 and the bottom surface 32a of the cutout portion 32 and an allowable relative approaching amount of the inner surfaces 33 of the hook portions 30 and the radial cutout portion 32b of the cutout portion 32. Thus, owing to formation of the cutout portion 32, the flange portion 31 for receiving the tapered rollers 23 is deteriorated in strength. As a result, stable operation (rotation) may not be performed over a long period of time.

Further, when a thickness (axial length) of the flange portion 31 is set to be large for the purpose of securing strength of the flange portion 31, it is impossible to set the axial length of a raceway surface 35 of the inner race 21 to be larger. As a result, load rating cannot be increased even when the flange portion (small flange) on the smaller diameter side is omitted.

In view of the above-mentioned problem, the present invention has been made to provide a tapered roller bearing in which strength of a flange portion for receiving larger end surfaces of tapered rollers is ensured and the tapered rollers have a longer axial length so as to increase load rating.

### Means for solving the Problem

The above-mentioned problem is solved by a tapered roller bearing according claim 1.

According to the tapered roller bearing of the present invention, the raceway surface of the inner race extends from the flange portion to a smaller diameter end, and the flange portion and a grooved portion on the smaller diameter side of the inner race are omitted, the flange portion and the grooved portion existing in the conventional tapered roller bearings. Thus, it is possible to secure a larger area for the raceway surface correspondingly to sizes of the flange portion and the grooved portion thus omitted. Further, the hook portion to be engaged with the flange portion of the inner race are provided to the retainer, and hence the tapered rollers can be prevented from falling to a smaller end side.

The maximum height dimension of the flange portion of the inner race is set to be equal to or more than 30% of the diameter of the larger end surface of each of the tapered rollers. Thus, without decreasing the axial length of the raceway surface of the inner race, strength of the flange portion can be secured.

The hook portion effects hooking with respect to the flange portion of the inner race so that the inner race, the tapered rollers, and the retainer are maintained in an assembled state, the hook portion being kept out of contact with the flange portion when the retainer is in a neutral state with respect to an axial center. An inner surface of the hook portion and a bottom surface of a cutout portion of the flange portion are brought into contact with each other when the hook portion is kept out of contact with the flange portion or brought into contact with the flange portion during operation.

It is preferred that a minimum inner-diameter dimension of the outer race be set to be larger than a maximum outer-diameter dimension of the flange portion of the inner race. With this, the outer race and the inner race can be molded by two-stage forging in which an outer-race formation material and an inner-race formation material are integrated with each other.

The retainer is made of resin. A polyphenylene sulfide resin (PPS) is preferred. PPS is a high-performance engineering plastic having a molecular structure in which a phenyl group (benzene ring) and sulfur (S) are alternately repeated. PPS is crystalline and is excellent in heat resistance, for example, has a continuous use temperature of 200°C to 220°C and has a deflection temperature under load in a high load (1.82 MPa) condition of 260°C or higher. In addition, PPS has high tensile strength and flexural strength. PPS has a mold shrinkage factor as small as 0.3 to 0.5%, and hence has good dimensional stability. PPS is also excellent in flame retardance and chemical resistance. PPS is broadly classified into three types: a crosslinked type; a linear type; and a semi-crosslinked type. The crosslinked type is a high molecular weight product obtained by crosslinking a low molecular weight polymer and is brittle, and thus, the main grade is a grade reinforced with a glass fiber. The linear type is a high molecular weight product obtained without any cross-linking process at a polymerization stage, and has high toughness. The semi-crosslinked type is characterized by having both properties of the crosslinked type and the linear type.

### Effects of the Invention

In the tapered roller bearing of the present invention, the flange portion on the smaller diameter side of the inner race is omitted, the flange portion existing in the conventional tapered roller bearings. Thus, it is possible to achieve weight reduction correspondingly to weight of the flange portion thus omitted. In addition, a size of the raceway surface is increased correspondingly to the sizes of the flange portion and the grooved portion on the smaller diameter side thus omitted. With this, it is possible to increase the length of the axial center of the tapered rollers, and hence to increase the load capacity thereof. As a result, it is possible to achieve longer life of the tapered roller bearing. The hook portion stably prevents the rollers from being detached from the inner race. With this, the inner race, the rollers, and the retainer can be held in an assembly state, and hence there is no change in handling of the bearing.

The hook portion stably prevents the rollers from being detached from the inner race. With this, it is possible to enhance incorporating properties. Further, the hook portion does not hinder rotation during operation, and hence it is possible to effect smooth rotation.

The strength of the flange portion can be secured without decreasing the axial length of the raceway surface of the inner race. Thus, it is possible to sufficiently secure the axial length of the raceway surface and to increase load capacity. In addition, the tapered rollers can be stably received. Further, the hook portion stably prevents the rollers from being detached from the inner race. With this, it is possible to enhance incorporating properties.

The minimum inner-diameter dimension of the outer race is set to be larger than the maximum outer-diameter dimension of the flange portion. With this, it is possible to perform simultaneous forging (two-stage forging) of the outer race and the inner race, and hence possible to increase a material yield. As a result, productivity is enhanced.

### n.a.

The retainer is made of a resin. In comparison with one formed of a steel plate, the retainer made of a resin has the following features: lighterweight, self-lubricancy, and lower frictional coefficient. Thus, synergistically with the effect of a lubricating oil existing in the bearing, it is possible to suppress generation of abrasion due to contact with the outer race. Further, the retainer made of a resin is lighterweight and has lower frictional coefficient, and hence is suitable for suppressing torque loss and abrasion of the retainer at the time of activating the bearing. In this context, adoption of a polyphenylene sulfide resin (PPS) exhibiting high resistance against oil, high temperature, and chemicals to the retainer leads to significant elongation of the life of the retainer.

Thus, the tapered roller bearing of the present invention is optimum as a bearing for supporting a power transmission shaft of an automotive vehicle.

### Brief Description of the Drawings

- [FIG. 1]: A sectional view of a tapered roller bearing according to an embodiment of the present invention.
- [FIG. 2]: An enlarged sectional view of a main part of the tapered roller bearing.
- [FIG. 3]: A sectional view illustrating a molding method for an outer race and an inner race.
- [FIG. 4]: A sectional view of a conventional tapered roller bearing.
- [FIG. 5]: An enlarged sectional view of a main part of the conventional tapered roller bearing.
- [FIG. 6]: A sectional view of another conventional tapered roller bearing.
- [FIG. 7]: A perspective view of the retainer of the tapered roller bearing illustrated in FIG. 6.

### Description of the Symbols

- 51: inner race
- 52: outer race
- 54a: larger-diameter-side annular portion
- 54b: smaller-diameter-side annular portion
- 56b: inner surface
- 56c: elongated surface
- 56d: chamfer
- 56e: connection
- 65: hook portion
- 66: cutout portion

### Best Mode for carrying out the Invention

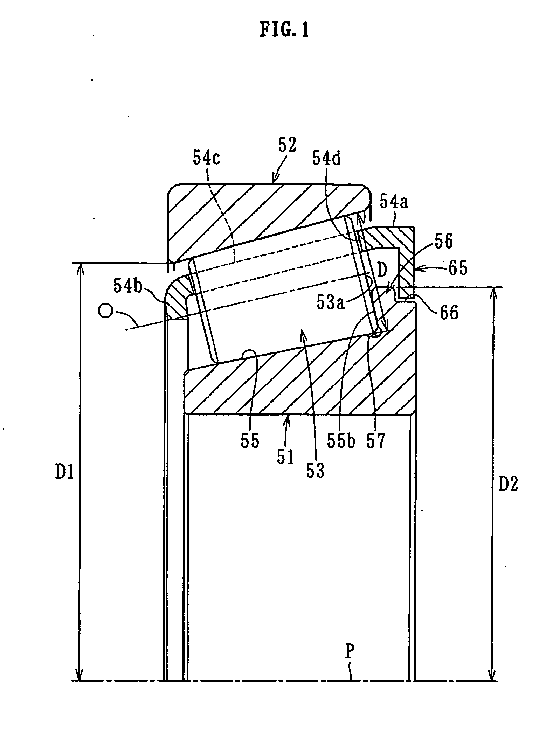

In the following, the embodiment of the present invention is described with reference to FIGS. 1 to 3.

FIG. 1 illustrates a tapered roller bearing according to the present invention. The tapered roller bearing includes an inner race 51, an outer race 52, a plurality of tapered rollers 53 arranged so as to be rollable between the inner race 51 and the outer race 52, and a retainer 54 for retaining the tapered rollers 53 at predetermined circumferential intervals.

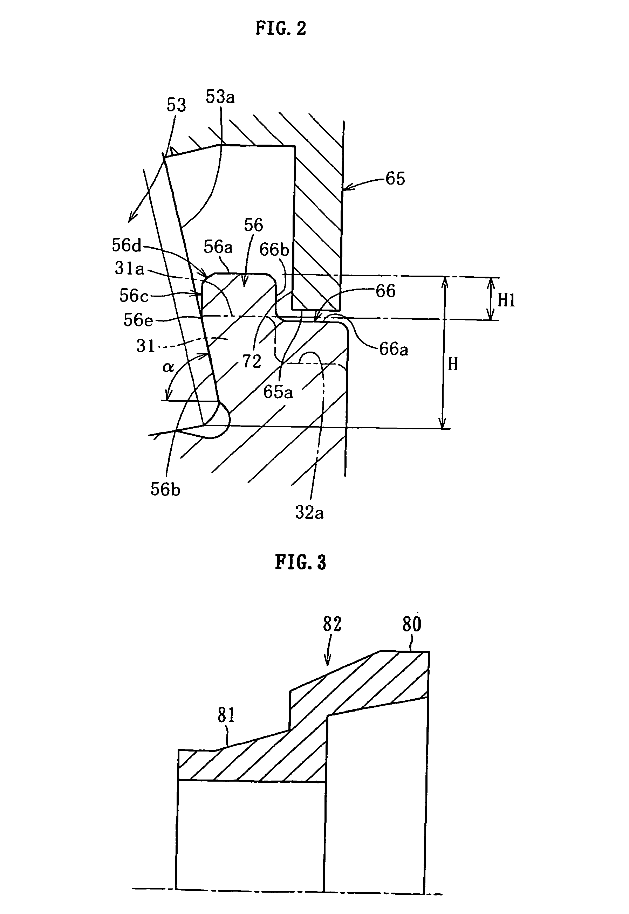

The inner race 51 has a tapered raceway surface 55 formed on a radially outer surface thereof, and a flange portion 56 protruding to a radially outer side is formed on a larger diameter side of the raceway surface 55. That is, the raceway surface 55 extends from the flange portion 56 to a smaller diameter end, and hence the flange portion is not formed on the smaller diameter side unlike an inner race of a conventional tapered roller bearing. A grooved portion 57 is formed in a corner portion between the raceway surface 55 and the flange portion 56. Further, as illustrated in FIG. 2, an inner surface (that is, end surface on the smaller diameter side) 56b of the flange portion 56 is inclined with respect to a plane orthogonal to a bearing axial center P at a predetermined angle α.

The flange portion 56 serves as a large flange for supporting a larger end surface 53a of each of the tapered rollers 53 on an inner surface 56b thereof, and for bearing axial load applied through an intermediation of each of the tapered rollers 53, to thereby guide the rolling of the tapered rollers 53. Note that, a small flange provided in a conventional tapered roller bearing does not play a special role during the rotation of the bearing. In this context, such a component is omitted in the present invention. The flange portion 56 comprises an elongated surface 56c continuous with the inner surface 56b and extending in a direction away from the larger end surface 53a of the tapered rollers 53, a radially outer surface 56a and a chamfer 56d formed between the elongated surface 56c and the radially outer surface 56a.

The outer race 52 has a tapered raceway surface 60 on a radially inner surface thereof. The plurality of tapered rollers 53 retained by the retainer 54 roll between the raceway surface 60 and the raceway surface 55 of the inner race 51.

In the tapered roller bearing, the tapered rollers 53 and the respective raceway surfaces 55 and 60 of the inner race 51 and the outer race 52 are held in linear contact with each other, and the tapered roller bearing is designed such that the respective raceway surfaces 55 and 60 of the inner and outer races and a roller center O accord with one point (not shown) on the axial center P.

Further, as illustrated in FIGS. 1 and 2, the retainer 54 includes a pair of annular portions 54a and 54b and brace portions 54c extending in a direction of the roller center O so as to couple the annular portions 54a and 54b with each other at equiangular positions. The tapered rollers 53 are rotatably accommodated in pockets 54d formed by being partitioned with the brace portions 54c and 54c adjacent to each other in a circumferential direction.

On an outer end surface of the larger-diameter-side annular portion 54a, a plurality of hook portions 65 having a rectangular flat-plate shape and protruding in a radially inner direction are arranged at predetermined pitches in the circumferential direction. The hook portions 65 are engaged with the flange portion 56 of the inner race 51. That is, as illustrated in FIG. 2, a cutout portion 66 is formed on a larger diameter side of a radially outer surface 56a of the flange portion 56 of the inner race 51, and the hook portions 65 are engaged with the cutout portion 66. In this case, between the hook portions 65 and the cutout portion 66, there are slight gaps in an axial direction and a radial direction. With this, the retainer 54 is allowed to slightly move in the axial direction and the radial direction. That is, the hook portions 65 are kept out of contact with the flange portion 56 of the inner race 51 when the retainer in a neutral state with respect to the axial center during operation (in a bearing-assembled state) is kept out of contact with the same flange portion 56, and the hook portions 65 are brought into contact with the flange portion 56 while a radial end surface 66a of the cutout portion 66 and an inner surface (radially inner surface) 65a of each of the hook portions 65 are brought into contact with each other during operation. The hook portions 65 effect hooking so that the inner race 51, the tapered rollers 53, and the retainer 54 are maintained in the assembled state during non-operation. Thus, a cutout dimension of the cutout portion 66 is set in accordance with a relative approaching amount to be tolerated between the radially inner end 65a of each of the hook portions 65 and the radial end surface 66a of the cutout portion 66 and with a mutual approaching amount to be tolerated between an inner surface 72 of each of the hook portions 65 and a radial cutout surface 66b of the cutout portion 66.

A maximum height dimension H of the flange portion 56 of the inner race 51 is set to be equal to or more than 30% of a diameter D of the larger end surface 53a of each of the tapered rollers 53 (refer to FIG. 1). Meanwhile, in a conventional product illustrated in FIG. 4, the maximum height dimension H of the flange portion is less than equal to or more than 20% and less than 30% as large as the diameter D of the larger end surface 53a of each of the tapered rollers 53. As illustrated in FIG. 2, a height position of the radially outer surface 56a of the flange portion 56 can be raised substantially by H1, that is, substantially to that of a maximum radially outer surface of the flange portion of the conventional product. Note that, the imaginary line in FIG. 2 illustrates the flange portion of the conventional product. The connection 56e between the inner surface 56b and the elongated surface 56c is positioned at the height of the radially outer surface 31a of the flange portion 31 of the conventional product, from which the elongated surface 56c extends in the direction away from the larger end surface 53a of each of the tapered rollers 53. The diameter of the radially inner end 65a of the hook portion 65 is larger than the diameter of the connection 56e.

Incidentally, the retainer 54 may be manufactured by molding a synthetic resin material. Further, it is preferred to use a synthetic resin material made of engineering plastic. Further, in the case of a resin, specifically, engineering plastics, the retainer made of a resin does not involve operations such as bottom-widening or caulking in bearing assembly. Therefore, desired dimensional accuracy is easily secured. Further, in comparison with one formed of a steel plate, the retainer made of a resin has the following features: lighterweight, self-lubricancy, and lower frictional coefficient. Thus, synergistically with the effect of a lubricating oil existing in the bearing, it is possible to suppress generation of abrasion due to contact with the outer race. Further, the retainer made of a resin is lighterweight and has lower frictional coefficient, and hence is suitable for suppressing torque loss and abrasion of the retainer at the time of activating the bearing. Note that, the engineering plastics represent a synthetic resin which is especially excellent in thermal resistance and which can be used in the fields where high strength is required. A resin further excellent in thermal resistance and strength is referred to as super engineering plastics, and the super engineering plastics may be used.

Examples of the engineering plastics include polycarbonate (PC), polyamide 6 (PA6), polyamide 66 (PA66), polyacetal (POM), modified polyphenylene ether (m-PPE), polybutylene terephthalate (PBT), GF-reinforced polyethylene terephthalate (GF-PET), and ultra high molecular weight polyethylene (UHMW-PE). Further, examples of the super engineering plastics include polysulfone (PSF), polyether sulfone (PES), polyphenylene sulfide (PPS), polyarylate (PAR), polyamideimide (PAI), polyetherimide (PEI), polyetheretherketone (PEEK), liquid crystal polymer (LCP), thermoplastic polyimide (TPI), polybenzimidazole (PBI), polymethylpentene (TPX), poly(1,4-cyclohexanedimethylene terephthalate) (PCT), polyamide 46 (PA46), polyamide 6T (PA6T), polyamide 9T (PA9T), polyamide 11, 12 (PA11, 12), fluororesins, and polyphthalamide (PPA).

Particularly preferred is a polyphenylene sulfide resin (PPS). PPS is a high-performance engineering plastic having a molecular structure in which a phenyl group (benzene ring) and sulfur (S) are alternately repeated. PPS is crystalline and is excellent in heat resistance, for example, has a continuous use temperature of 200°C to 220°C and has a deflection temperature under load in a high load (1.82 MPa) condition of 260°C or higher. In addition, PPS has high tensile strength and flexural strength. PPS has a mold shrinkage factor as small as 0.3 to 0.5%, and hence has good dimensional stability. PPS is also excellent in flame retardance and chemical resistance. PPS is broadly classified into three types: a crosslinked type; a linear type; and a semi-crosslinked type. The crosslinked type is a high molecular weight product obtained by crosslinking a low molecular weight polymer and is brittle, and thus, the main grade is a grade reinforced with a glass fiber. The linear type is a high molecular weight product obtained without any cross-linking process at a polymerization stage, and has high toughness. The semi-crosslinked type is characterized by having both properties of the crosslinked type and the linear type.

Incidentally, in the tapered roller bearing, a minimum inner-diameter dimension D1 of the outer race 52 is set to be larger than a maximum outer-diameter dimension D2 of the flange portion 56 of the inner race 51. With this, the outer race 52 and the inner race 51 can be molded by two-stage forging in which an outer-race formation material and an inner-race formation material are integrated with each other. That is, in the two-stage forging, there is molded by forging a cylindrical material 82 in which an outer-race formation portion 80 and an inner-race formation portion 81 as illustrated in FIG. 3, and after that, the outer-race formation portion 80 and the inner-race formation portion 81 are separated from each other so as to mold the outer race 52 from the outer-race formation portion 80 and mold the inner race 51 from the inner-race formation portion 81.

Thus, when the minimum inner-diameter dimension D1 of the outer race 52 is not set to be larger than the maximum outer-diameter dimension D2 of the flange portion 56 of the inner race 51, the two-stage forging as described above cannot be achieved.

Next, description is made on an assembly method of the tapered roller bearing. First, the tapered rollers 53 are accommodated in the pockets 54d of the retainer 54, respectively. After that, the inner race 51 is fitted to an inside of an assembly thus obtained of the retainer 54 and the tapered rollers 53. In other words, the assembly of the retainer 54 and the tapered rollers 53 is fitted to an outside of the inner race 51. In this case, it is necessary to fit the hook portions 65 to the cutout portion 66 of the inner race 51. In a case of a retainer made of a resin, fitting can be achieved by elastically deforming the hook portions 65.

After that, a pair of assemblies each including one of the inner races 51, the tapered rollers 53, and one of the retainers 54 are formed, and the assemblies are inserted onto the outer race 52, respectively. Thus, it is possible to assemble the tapered roller bearing in which the inner race 51, the tapered rollers 53, and the retainer 54 are integrated with each other.

In the tapered roller bearing of the present invention, the raceway surface 55 of the inner race 51 extends from the flange portion 56 to a smaller diameter end, and the flange portion and a grooved portion on the smaller diameter side of the inner race 51 are omitted, the flange portion and the grooved portion existing in the conventional tapered roller bearings. Thus, it is possible to secure a larger area for the raceway surface 55 correspondingly to sizes of the flange portion and the grooved portion thus omitted. Further, the hook portions 65 to be engaged with the flange portion of the inner race during non-operation are provided to the retainer 54, and hence the tapered rollers 53 can be prevented from falling to a smaller end side.

The maximum height dimension H of the flange portion 56 of the inner race 51 is set to be equal to or more than 30% of a diameter of a larger end surface 53a of each of the tapered rollers 53. Thus, without decreasing the axial length of the raceway surface 55 of the inner race 51, strength of the flange portion 56 can be achieved. The reason for this is as follows: The raceway surface 55 of the inner race 51 is reduced in diameter from the flange portion 56 side to the side opposite to the flange, and hence the inner surface (surface corresponding to the larger end surface of each of the rollers) 56b of the flange portion 56 extends upright in a direction orthogonal to that of the raceway surface 55. When the height dimension of the flange portion 56 is increased, the axial length of the flange portion 56 is increased to the radially outer side in accordance therewith.

The hook portions stably prevent the rollers from being detached from the inner race. With this, it is possible to enhance incorporating properties. Further, the hook portions do not hinder rotation during operation, and hence it is possible to effect smooth rotation.

The minimum inner-diameter dimension of the outer race 52 is set to be larger than the maximum outer-diameter dimension of the flange portion 56. With this, it is possible to perform simultaneous forging (two-stage forging) of the outer race 52 and the inner race 51, and hence possible to increase a material yield. As a result, productivity is enhanced.

As described above, the tapered roller bearing of the present invention is optimum as a bearing for supporting a power transmission shaft of an automotive vehicle.

Hereinabove, description has been made on the embodiment of the present invention. In this context, the present invention is not limited to the above-mentioned embodiment, and various modifications may be made thereto. For example, while the number of the hook portions 65 may be arbitrarily increased and decreased, at least one hook portion is sufficient for stably preventing the tapered rollers 23 from falling off. In consideration of strength and incorporating properties, it is preferred to arrange four to eight hook portions at equal pitches in the circumferential direction. Further, the hook portions 65 may be constituted by a ring portion. In this embodiment, the cutout portion 66 is formed on the larger diameter side end surface 69 of the inner race 51. Instead of being formed on the larger diameter side end surface 69, the cutout portion 66 may be constituted by an annular recessed groove formed in the radially outer surface 56a of the flange portion 56.

The tapered roller bearing may be used in a single row as illustrated in FIG. 1, or may be used in pairs in double rows in a facing manner.

### Industrial Applicability

The present invention may be used in a differential or transmission of an automobile, and may be used in various portions in which the tapered roller bearing can be conventionally used.

## Claims

1. A tapered roller bearing, comprising:
an inner race (51); an outer race (52); a plurality of tapered rollers (53) arranged so as to be rollable between the inner race and the outer race; a retainer (54) made of resin, for retaining the tapered rollers at predetermined circumferential intervals; and a flange portion (56) provided only on a larger diameter side of a radially outer surface of the inner race (51), for guiding the tapered rollers, wherein:
a) the retainer (54) comprises a larger-diameter-side annular portion (54a); a smaller-diameter-side annular portion (54b); and brace portions (54c) for coupling the larger-diameter-side annular portion and the smaller-diameter-side annular portion with each other, the larger-diameter-side annular portion (54a) being provided with a hook portion (65);
b) the flange portion (56) comprising a cut out portion (66) being engagable with the hook portion (65), the cut out portion (66) being formed in a larger diameter side of a radially outer surface (56a) of the flange portion (56);
c) a maximum height dimension of the flange portion (56) is set to be equal to or more than 30% of a diameter of the larger end surface (53a) of each of the tapered rollers (53);
d) the flange portion (56) includes
d₁) an inner surface (56b) to be brought into contact with the larger end surface (53a) of each of the tapered rollers (53);
**characterised in that** the flange portion (56) further includes
d₂) an elongated surface (56c) that continues from the inner surface (56b) and extends in a direction away from the larger end surface (53a) of each of the tapered rollers (53); and
d₃) a chamfer (56d) between the elongated surface (56c) and the radially outer surface (56a),
e) a radially inner surface (65a) of the hook portion (65) has a larger diameter than a diameter of a connection (56e) between the inner surface (56b) and the elongated surface (56c) of the flange portion (56).

2. A tapered roller bearing according to claim 1, wherein:
the hook portion (65) effects hooking with respect to the flange portion (56) of the inner race (51) so that the inner race, the tapered rollers (53) and the retainer (54) are maintained in an assembled state, the hook portion (65) being kept out of contact with the flange portion (56) when the retainer (54) is in a neutral state with respect to an axial center; and
an inner surface (65a) of the hook portion and the radial end surface (66a) of the cutout portion (66) are brought into contact with each other when the hook portion (65) is kept out of contact with the flange portion (56) or brought into contact with the flange portion (56) during operation.

3. A tapered roller bearing according to claim 1 or 2, wherein a minimum inner-diameter dimension of the outer race (52) is set to be larger than a maximum outer-diameter dimension of the flange portion (56) of the inner race.

4. A tapered roller bearing according to claim 1 or 2, wherein the resin used for forming the retainer (54) comprises a PPS.

5. A tapered roller bearing according to any one of claims 1 or 2, which supports a power transmission shaft of an automotive vehicle.

## Patentansprüche

1. Kegelrollenlager, mit:
einem inneren Laufring (51); einem äußeren Laufring (52); einer Mehrzahl von Kegelrollen (53), die so angeordnet sind, dass sie zwischen dem inneren Laufring und dem äußeren Laufring rollen können; einem aus einem Harz bestehenden Käfig (54), um die Kegelrollen entlang dem Umfang in vorherbestimmten Abständen zu halten; und einem Flanschbereich (56), der nur auf einer Seite größeren Durchmessers einer radial äußeren Fläche des inneren Laufrings (51) vorgesehen ist, um die Kegelrollen zu führen, wobei:
a) der Käfig (54) einen ringförmigen Bereich (54a) auf der Seite größeren Durchmessers aufweist; einen ringförmigen Bereich (54b) auf der Seite kleineren Durchmessers; und Klammerabschnitte (54c), um den ringförmigen Bereich auf der Seite größeren Durchmessers und den ringförmigen Bereich auf der Seite kleineren Durchmessers miteinander zu verbinden, wobei der ringförmige Bereich (54a) auf der Seite größeren Durchmessers mit einem Hakenbereich (65) versehen ist;
b) der Flanschbereich (56) einen Ausschnittbereich (66) aufweist, der mit dem Hakenbereich (65) in Eingriff gebracht werden kann, wobei der Ausschnittbereich (66) in einer Seite größeren Durchmessers einer radial äußeren Fläche (56a) des Flanschbereichs (56) ausgebildet ist;
c) eine maximale Höhenabmessung des Flanschbereichs (56) auf einen Wert festgelegt ist, der größer als oder gleich 30% von einem Durchmesser der größeren Endfläche (53a) jeder der Kegelrollen (53) ist;
d) der Flanschbereich (56) Folgendes aufweist:
d₁) eine Innenfläche (56b), die mit der größeren Endfläche (53a) jeder der Kegelrollen (53) in Kontakt zu bringen ist,
**dadurch gekennzeichnet, dass** der Flanschbereich (56) außerdem aufweist:
d₂) eine verlängerte Fläche (56c), die sich von der Innenfläche (56b) aus fortsetzt und sich in eine Richtung weg von der größeren Endfläche (53a) jeder der Kegelrollen (53) erstreckt; und
d₃) eine Abschrägung (56d) zwischen der verlängerten Fläche (56c) und der radial äußeren Fläche (56a),
wobei
e) eine radial innere Fläche (65a) des Hakenbereichs (65) einen größeren Durchmesser hat als ein Durchmesser einer Verbindung (56e) zwischen der Innenfläche (56b) und der verlängerten Fläche (56c) des Flanschbereichs (56).

2. Kegelrollenlager nach Anspruch 1, bei dem
der Hakenbereich (65) das Verhaken bezüglich des Flanschbereichs (56) des inneren Laufrings (51) bewirkt, so dass der innere Laufring, die Kegelrollen (53) und der Käfig (54) in einem montierten Zustand gehalten werden, wobei dafür gesorgt wird, dass der Hakenbereich (65) keinen Kontakt mit dem Flanschbereich (56) hat, wenn der Käfig (54) in Bezug auf eine axiale Mitte in einem neutralen Zustand ist; und
eine Innenfläche (65a) des Hakenbereichs und die radiale Endfläche (66a) des Ausschnittbereichs (66) miteinander in Kontakt gebracht werden, wenn dafür gesorgt wird, dass der Hakenbereich (65) keinen Kontakt mit dem Flanschbereich (56) hat, oder wenn der Hakenbereich mit dem Flanschbereich (56) während des Betriebs in Kontakt gebracht wird.

3. Kegelrollenlager nach Anspruch 1 oder 2, bei dem eine Mindestgröße des Innendurchmessers des äußeren Laufrings (52) auf einen Wert festgelegt ist, der größer als eine maximale Größe des Außendurchmessers des Flanschbereichs (56) des inneren Laufrings ist.

4. Kegelrollenlager nach Anspruch 1 oder 2, bei dem das Harz, das zur Bildung des Käfigs (54) verwendet wird, ein PPS aufweist.

5. Kegelrollenlager nach einem der Ansprüche 1 oder 2, das eine Kraftübertragungswelle eines Kraftfahrzeugs stützt.

## Revendications

1. Roulement à rouleaux coniques, comprenant :
une bague de roulement intérieure (51) ; une bague de roulement extérieure (52) ; une pluralité de rouleaux coniques (53) agencée de manière à pouvoir rouler entre la bague de roulement intérieure et la bague de roulement extérieure ; un dispositif de retenue (54) en résine, destiné à retenir les rouleaux coniques à des intervalles circonférentiels prédéterminés ; et une partie bride (56) prévue seulement du côté de grand diamètre d'une surface radialement extérieure de la bague de roulement intérieure (51), destinée à guider les rouleaux coniques, dans lequel :
a) le dispositif de retenue (54) comprend une partie annulaire du côté de grand diamètre (54a) ; une partie annulaire du côté de petit diamètre (54b) ; et des parties renforts (54c) destinées à coupler l'une à l'autre la partie annulaire du côté de grand diamètre et la partie annulaire du côté de petit diamètre, la partie annulaire du côté de grand diamètre (54a) étant dotée d'une partie crochet (65) ;
b) la partie bride (56) comprenant une partie découpe (66) pouvant être mise en prise avec la partie crochet (65), la partie découpe (66) étant formée du côté de grand diamètre d'une surface radialement extérieure (56a) de la partie bride (56) ;
c) la dimension maximale de la hauteur de la partie bride (56) est fixée de manière à être supérieure ou égale à 30 % du diamètre de la surface de grande extrémité (53a) de chacun des rouleaux coniques (53) ;
d) la partie bride (56) inclut :
d1) une surface intérieure (56b) à mettre en contact avec la surface de grande extrémité (53a) de chacun des rouleaux coniques (53) ;
**caractérisé en ce que** la partie bride (56) inclut en outre :
d2) une surface allongée (56c) qui se prolonge à partir de la surface intérieure (56b) et qui s'étend dans une direction en s'éloignant de la surface de grande extrémité (53a) de chacun des rouleaux coniques (53) ; et
d3) un chanfrein (56d) situé entre la surface allongée (56c) et la surface radialement extérieure (56a) ;
dans lequel :
e) la surface intérieure de manière radiale (65a) de la partie crochet (65) présente un plus grand diamètre que le diamètre de la connexion (56e) entre la surface intérieure (56b) et la surface allongée (56c) de la partie bride (56).

2. Roulement à rouleaux coniques selon la revendication 1, dans lequel :
la partie crochet (65) réalise un accrochage par rapport à la partie bride (56) de la bague de roulement intérieure (51) de sorte que la bague de roulement intérieure, les rouleaux coniques (53) et le dispositif de retenue (54), soient maintenus dans un état assemblé, la partie crochet (65) n'étant pas en contact avec la partie bride (56) lorsque le dispositif de retenue (54) se trouve dans un état neutre par rapport à un centre axial ; et
la surface intérieure (65a) de la partie crochet et la surface d'extrémité radiale (66a) de la partie découpe (66) sont mises en contact l'une avec l'autre lorsque la partie crochet (65) n'est pas en contact avec la partie bride (56) ou est mise en contact avec la partie bride (56) en fonctionnement.

3. Roulement à rouleaux coniques selon la revendication 1 ou 2, dans lequel la dimension du diamètre intérieur minimum de la bague de roulement extérieure (52) est fixée de manière à être supérieure à la dimension du diamètre extérieur maximum de la partie bride (56) de la bague de roulement intérieure.

4. Roulement à rouleaux coniques selon la revendication 1 ou 2, dans lequel la résine utilisée pour former le dispositif de retenue (54) comprend un PPS.

5. Roulement à rouleaux coniques selon l'une quelconque des revendications 1 ou 2, qui soutient un arbre de transmission d'un véhicule automobile.
